(19) Europäisches Patentamt
European Patent Office
Office européen des brevets

(11) EP 1 170 120 A1

(12) **EUROPEAN PATENT APPLICATION**
published in accordance with Art. 158(3) EPC

(43) Date of publication:
**09.01.2002 Bulletin 2002/02**

(21) Application number: **00908051.6**

(22) Date of filing: **14.03.2000**

(51) Int Cl.$^7$: **B32B 27/30**, B05D 7/24, G03G 15/20, F16G 1/21

(86) International application number:
**PCT/JP00/01527**

(87) International publication number:
**WO 00/56546 (28.09.2000 Gazette 2000/39)**

(84) Designated Contracting States:
**AT BE CH CY DE DK ES FI FR GB GR IE IT LI LU MC NL PT SE**

(30) Priority: **19.03.1999 JP 7591899**

(71) Applicant: **Daikin Industries, Ltd.**
**Osaka-shi, Osaka 530-8323 (JP)**

(72) Inventors:
- **TOMIHASHI, Nobuyuki, Yodogawa W., aikin Indust.Ltd Osaka 566-8585 (JP)**
- **OGITA, Koichiro, Yodogawa Works, Daikin Ind. Ltd Osaka 566-8585 (JP)**
- **TERASAKA, Kiyotaro, Yodogawa Works, Daikin Ind.Ltd Osaka 566-8585 (JP)**
- **KINOSHITA, Toshiyuki, Yodogawa W., Daikin Ind. Ltd Osaka566-8585 (JP)**

(74) Representative: **HOFFMANN - EITLE**
**Patent- und Rechtsanwälte Arabellastrasse 4**
**81925 München (DE)**

# (54) ARTICLE COATED WITH FLUORORESIN AND METHOD FOR PRODUCING THE SAME

(57) An article coated with a fluororesin comprising an article substrate, an elastic layer formed on the surface of the substrate and a layer of a fusible fluororesin as the outermost layer, wherein the layer of the fusible fluororesin is formed by curing the elastic layer at a temperature equal to or lower than the melting point of the fusible fluororesin until a degree of curing attained reaches 70 to 99.9%, and then melting the fusible fluororesin. Thereby, the coating defects formed when the layer of the fusible fluororesin are avoided, and the article coated with the fluororesin, which has the smooth surface layer of the fusible fluororesin and the two-layer coating with good driving durability.

EP 1 170 120 A1

## Description

FIELD OF THE INVENTION

The present invention relates to an article coated with a fluororesin. In particular, the present invention relates to an article coated with a fluororesin having an elastic layer comprising at least a fluoroelastomer-containing layer between an article substrate and the coating layer of the fluororesin.

BACKGROUND ART

Fluororesins are molded or coated, for example, coated on or impregnated in various substrates such as fabrics, fibers, metals, plastics, rubbers, etc. and widely used as industrial materials by making use of their good heat resistance, weather resistance, oil resistance, solvent resistance, chemical resistance and non-tackiness.

When a fluororesin is compounded in a fluoroelastomer, elasticity can be imparted to molded articles of the fluoroelastomer. When the fluororesin is coated on a flexible substrate such as a rubber, the coated layer can follow the flexibility of the substrate and also impart the non-tackiness to the surface of the substrate.

However, when a fluoroelastomer containing a fluororesin is coated on a surface of a heat-resistant roll or belt, which is used in an office automation (OA) instrument (e.g. a copying machine, a printer, etc.), a fluororesin-rich layer on the surface is abraded and thus the durability of the non-tackiness of the layer is insufficient.

Therefore, it is proposed to further apply a fluororesin on the coating layer of the mixture of the fluororesin and the fluoroelastomer to increase the durability of the non-tackiness. However, coating defects due to foaming and interlayer peeling appear at the top layer of the fluororesin. Thus, no coating film that has a smooth surface and driving durability has been obtained.

DISCLOSURE OF THE INVENTION

Objects of the present invention are to provide an article coated with a fusible fluororesin, which can solve the problem of coating defects generated when the coating of the fusible fluororesin is additionally formed on the coating of the fluoroelastomer containing the fluororesin on the article substrate, and which forms a smooth surface layer of the fusible fluororesin and achieves good driving durability of the double layer coating film, and to provide a method for producing such an article coated with a fusible fluororesin.

According to the present invention, the above objects are achieved by an article coated with a fluororesin comprising an article substrate, an elastic layer formed on the surface of the substrate and a layer of a fusible fluororesin as the outermost layer, wherein the layer of the fusible fluororesin is formed by curing the elastic layer at a temperature equal to or lower than the melting point of the fusible fluororesin until a degree of curing attained, which is defined by the following equation (1), reaches 70 to 99.9%, and then melting the fusible fluororesin:

$$\text{Degree of curing attained} = [(W_0\text{-}W_A)\text{-}(W_1\text{-}W_A)]\text{x}100/[(W_0\text{-}W_A)\text{-}(W_2\text{-}W_A)] \qquad (1)$$

wherein $W_A$ is a weight of the substrate, $W_0$ is a total weight of the substrate and the dried coating layers, $W_1$ is a total weight of the substrate and the coating layers after the first baking step, and $W_2$ is a total weight of the substrate and the coating layers after the second baking step.

DETAILED DESCRIPTION OF THE INVENTION

The components used in the present invention will be explained in detail.

(A) Fluoroelastomers and their compositions

The fluoroelastomer is preferably a fluorine-containing copolymer containing repeating units represented by $-CH_2-$ in the backbones.

One typical example of such a copolymer is a fluorine-containing elastic copolymer comprising vinylidene fluoride. Examples of such a copolymer are copolymers comprising at least one repeating unit selected from the group consisting of $-CF_2-CH_2-$, $-CH_2-CH_2-$ and $-CH_2-CH(CH_3)-$, and at least one repeating unit selected from the group consisting of $-CF_2-CF(CF_3)-$, $-CF_2-CF_2-$, $-CF_2-CFCl-$, $-CF_2-CF(CF_2H)-$ and $-CF_2-CF(ORf)-$ in which Rf is a fluoroalkyl group having 1 to 9 carbon atoms.

Specific examples of such copolymers include vinylidene fluoride-hexafluoropropylene copolymers, vinylidene fluoride-tetrafluoroethylene-hexafluoropropylene copolymers, ethylene-hexafluoropropylene copolymers, tetrafluoroethylene-propylene copolymers, etc. Among them, the vinylidene fluoride copolymers are preferable from the viewpoint of their crosslinkability.
The molecular weight of the fluoroelastomer is preferably from 5,000 to 200,000.
Such fluorine-containing elastomeric copolymers are commercially distributed under the trade name of "DAIEL® " (available from Daikin Industries, Ltd.), "VITONE FLOME® " (available from E. I. duPont), "AFLAS® " (available from ASAHI GLASS Co., Ltd.), etc.
As curing agents used to cure the fluoroelastomers, conventional curing agents for the fluoroelastomers can be used. Preferred examples of the curing agents are as follows:

(1) Polyamine curing agents

Aliphatic polyamines and their salts such as triethylenetetramine, tetraethylenepetnamine, ethylenediamine, triethylenediamine, ethanolamine, 3,9-bis(3-aminopropyl)-2,4,8,10-tetraoxa-2-spiro[5.5]-undecane, etc.; aromatic amines and their salts such as diaminodiphenylmethane, xylylenediamine, phenylenediamine, diaminodiphenylsulfone, diaminodiphenylether, etc.; modified polyamines; polyamidoamines; and an aminosilane compound of the formula:

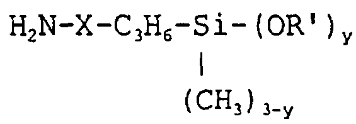

wherein R' is a methyl group or an ethyl group, X is a single bond, $-C_2H_4NH-$, -CONH- or $-C_2H_4NH-C_2H_4NH-NH-$, and y is 2 or 3, or its partially or completely hydrolyzed products.

(2) Polyol curing agents

Polyol curing agents may be compounds or polymers having at least two hydroxyl groups, in particular, phenolic hydroxyl groups in a molecule, and having curing capability. Specific examples of the polyol curing agents include phenol derivatives and their salts such as bisphenol A, bisphenol AF, hydroqunone, etc.;

polyhydroxyl compounds having at least two phenolic hydroxyl group in a molecule such as phenol resins, and their salts;

a compound of the formula:

$$Rf(CH_2OH)_2$$

wherein Rf is a perfluoroalkylpolyether group); and the like.

(3) Polythiol curing agents

Triazinethiol, 1,6-hexanedithiol, 4,4'-dimethylmercaptodiphenyl, 1,5-naphthalenedithiol, etc.
Besides the above exemplified curing agents, any commercially sold curing agents for the fluoroelastomers may be used.
Preferably, a curing agent soluble in an organic solvent or in water is used when a medium is the organic solvent or water, respectively.
The curing agent is used in an amount of 0.1 to 20 wt. parts, preferably 0.5 to 5 wt. parts per 100 wt. parts of the fluoroelastomer.
To accelerate curing,a curing aid may be used. As the curing aid, the following compounds are preferable:

Quaternary ammonium salts, for example, alkyl and aralkyl quaternary ammonium salts (e.g. trimethylbenzylammonium chloride, triethylbenzylammonium chloride, dimethyldecylbenzylammonium chloride, triethylbenzylammonium chloride, myristylbenzyldimethylammonium chloride, dodecyltrimethylammonium chloride, dimethyltetradecylbenzylammonium chloride, trimethyltetradecylammonium chloride, coconuttrimethylammonium chloride, stearyltrimethylammonium chloride, distearyldimethylammonium chloride, tetrabutylammonium hydroxide,

1,4-phenylenedimethylenebistrimethylammonium dichloride, 1,4-phenylenedimethylenebistriethylammonium dichloride, ethylenebistriethylammonium dibromide, etc.), and quaternary 1,8-diaza-bicyclo[5.4.0]-7-undecenium salts (e.g. 8-methyl-1,8-diaza-bicylo[5.4.0]-7-undecenium chloride, 8-methyl-1,8-diaza-bicylo[5.4.0]-7-undecenium iodide, 8-methyl-1,8-diazabicylo[5.4.0]-7-undecenium hydroxide, 8-methyl-1,8-diazabicylo[5.4.0]-7-undecenium methylsulfate, 8-methyl-1,8-diazabicylo[5.4.0]-7-undecenium bromide, 8-propyl-1,8-diazabicylo[5.4.0]-7-undecenium bromide, 8-dodecyl-1,8-diazabicylo[5.4.0]-7-undecenium chloride, 8-dodecyl-1,8-diazabicylo[5.4.0]-7-undecenium hydroxide, 8-eicosyl-1,8-diazabicylo[5.4.0]-7-undecenium chloride, 8-tetracosyl-1,8-diazabicylo [5.4.0]-7-undecenium chloride, 8-benzyl-1,8-diazabicylo[5.4.0]-7-undecenium chloride, 8-benzyl-1,8-diazabicylo [5.4.0]-7-undecenium hydroxide, 8-phenethyl-1,8-diazabicylo[5.4.0]-7-undecenium chloride, 8-(3-phenylpropyl)-1,8-diaza-bicylo[5.4.0]-7-undecenium chloride, etc.);

Tertiary amines (e.g. trimethylamine, triethylamine, tri-n-propylamine, tri-n-butylamine, triisobutylamine, methyldiethylamine, dimethylethylamine, dimethyl-n-propylamine, dimethyl-n-butylamine, dimethylisobutylamine, dimethylisopropylamine, dimethyl-sec.-butylamine, dimethyl-tert.-butylamine, triallylamine, diallylmethylamine, allyldimethylamine, benzyldimethylamine, benzyldiethylamine, N-allylpiperidine, N-ethylpiperidine, N-butylpiperidine, N-methylpyrolidine, N-cyclohexylpyrolidine, N-n-butylpyrolidine, N-ethylpyrolidine, N-benzylpyrolidine, 2,4,6-trimethylpyridine, etc.); and

Quaternary phosphonium salts (e.g. triphenylphosphinebenzyl chloride, etc.).

The curing aid is used in an amount of 0 to 10 wt. parts, preferably 0.1 to 5 wt. parts, per 100 wt. parts of the fluoroelastomer. Preferably, a curing aid soluble in an organic solvent or in water is used when a medium is the organic solvent or water, respectively.

In addition to the above components, the fluoroelastomer composition of the present invention may contain various additives which are added to conventional fluoroelastomer compositions, for example, fillers, colorants, acid-acceptors, and the like.

Examples of the fillers are carbon black, white carbon, calcium carbonate, barium sulfate, talc, calcium silicate, etc., and examples of the colorants are inorganic pigments, compound oxide pigments, etc.

Examples of the acid-acceptors are magnesium oxide, lead oxide, zinc oxide, lead carbonate, zinc carbonate, double salts such as hydrotalcite, etc. In general, the acid-acceptor is compounded in an amount of 1 to 40 wt. parts per 100 wt. parts of a fluorine-containing copolymer, depending on its activity.

Herein, a medium means a material in which the components contained in the fluoroelastomer composition of the present invention can be dissolved or dispersed.

Examples of the organic solvent include ketones (e.g. methy kethyl ketone, methyl isobutyl ketone, etc.), esters (e.g. butyl actate, isopentyl acetate, etc.), ethers (e.g. diethylene glycol dimethyl ether, etc.), hydrocarbons (e.g. toluene, xylene, etc.), amides (e.g. N,N-dimethylacetamide, N-methyl-2-pyrrolidone, etc.), and the like. The amount of the organic solvent is from 40 to 90 wt. % of the weight of the whole composition.

When water is used as a medium, a dispersant is used to disperse the fluoroelastomer and the fusible fluororesin in water. Example of the dispersant include anionic surfactants (e.g. laurylsulfate salts, perfluoroalkylcarboxylate salts, ω-hydroperfluoroalkylcarboxylate salts, etc.), nonionic surfactants (e.g. polyethylene glycol derivatives, polyethylene glycol/polypropylene glycol derivatives, etc.) and resinous dispersants (e.g. alkylpolyethylene glycol ethers, alkylphenylpolyethylene glycol ether, alkylpolyethylene glycol esters, ethylene glycol/polyethylene glycol copolymers, polyethylene glycol alkyl esters, polycarboxylate esters, etc.).

In the case of a coating composition, water is used in an amount of 30 to 90 wt. % of the weight of the whole composition, and the dispersant is used in an amount of 0.1 to 10 wt. % of the weight of the whole composition.

The aqueous coating composition is preferable from the viewpoint of environment protection.

A stabilizer can be added to the coating composition to improve the storage stability of the composition. Organic acids having 1 to 12 carbon atoms, preferably 1 to 4 carbon atoms are used. Organic acids having 9 or more carbon atoms are less preferable, since they remain in the coating films. Preferable examples of the organic acids are monocarboxylic acids such as formic acid, acetic acid, propionic acid, etc.; and dicarboxylic acids such as oxalic acid, malonic acid, succinic acid, etc.

Furthermore, a tackifier maybe added to the fluoroelastomer composition of the invention, when it is necessary to adhere the composition to a substrate or to increase the affinity of the the composition with the substrate, or when it is necessary to impart the affinity with a primer applied on the substrate to the composition. For example, when a substrate comprises a metal or glass, the tackifier can be a coupling agent such as a silane coupling agent, a titanium coupling agent, an aluminum coupling agent, etc. Among the curing agents, those having adhesion properties such as aminosilane compounds, poolyamidoamine, phenol resins, etc. may function as tackifiers.

The fluoroelastomer composition is easily prepared by kneading the fluoroelastomer, the optionally compounded fusible fluororesin, the curing agent and other components with an open roll or a kneader.

The fluoroelastomer composition is formulated in the form of a coating and coated on an article.

The fluoroelastomer composition can be formulated in the form of a coating by any one of the following methods:

(1) When the medium is an organic solvent

The base polymer of the fluoroelastomer, which is obtained by emulsion polymerization, is coagulated and dried to obtain a green rubber. With this green rubber, the filler, the acid-acceptor, the colorant and the like are kneaded with an open roll or a kneader to prepare a compound. The compound is dissolved or dispersed in the organic solvent, and then the stabilizer may optionally be added to the compound to obtain Liquid A.
Separately, the curing agent, the optional curing aid and the optional tackfier are dissolved in the organic solvent to obtain Liquid B.
In the case of a one-pack type coating, Liquids A and B are mixed.

(2) When the medium is water

A concentrated liquid of the fluoroelastomer is prepared by dispersing the fluoroelastomer in water in the presence of the dispersant. A fluoroelastomer latex as such may be used. The optional components such as the filler, the acid-acceptor and the dispersant are also dispersed with a mill in water using the dispersant. These dispersions are mixed, the stabilizer may optionally be added to the mixture and then the concentration and viscosity of the mixture are adjusted in suitable ranges with water to obtain Liquid A.
Separately, the aqueous solution of the curing agent and the curing aid is prepared when they are soluble in water or the aqueous dispersion of the curing agent and the curing agent is perpared using the dispersant when they are insoluble in water. Then, the tackifier may optionally be added to the aqueous solution or dispersion to obtain Liquid B.
In the case of a one-pack type coating, Liquids A and B are mixed.

(B) Fusible fluororesins

In the present invention, the fusible fluororesins, which may be added to the fluoroelastomer composition or used as the outermost layer, are thermally fusible fluororesins having a melting point of 320°C or less. Specific examples of the fusible fluororesins include the following fluororesins:
tetrafluoroethylene (TEE)-hexafluoropropylene (HFP) copolymers (FEP); tetrafluoroethylene-perfluoroalkyl vinyl ether (PFVE) copolymers (PFA), tetrafluoroethylenehexafluoropropylene-perfluoroalkyl vinyl ether copolymers (EPA), tetrafluoroethylene-chlorotrifluoroethylene (CTFE) copolymers (PCTFE), ethylene-tetrafluoroethylene copolymers (ETFE), polyvinylidenefluoride (PVdF), and polytetrafluoroethylene having a molecular weight of 300,000 or less (LMW-PTFE).
Here, PVFE includes compounds of the following formulas (1) to (5):

(1): $CF_2=CFO(CF_2)_nCF_2$ (n = 1 to 9)
(2) : $CF_2=CFO(CF_2CF_2CF_2O)_m-CF_2CF_2CF_3$ ($1 \leq m \leq 5$)
(3): $CF_2=CFO[CF_2CF_2(CF_3O)]_m-CF_2CF_2CF_3$ ($1 \leq m \leq 5$)
(4): $CF_2=CFO[CF_2CF_2(CF_3O)]_m-CF_2CF_2CF_2I$ ($1 \leq m \leq 5$)
(5): $CF_2=CFOCFOCH_2(CF_2)_kX$ (k = 1 to 12; X = H, F or Cl)

Among these fusible fluororesins, FEP, PFA are EPA are preferable from the viewpoint of non-tackiness and surface smoothness of the coating film.
When the fusible fluororesin is used in the outermost layer, resin pellets are heated and molten and then injection molded or extruded to form a film or a tube, which is adhered to the fluoroelastomer-containing layer as a primer layer. When it is desirable to form an outermost layer having a small thickness, preferably, the fluororesin is ground to form a powder coating, or the dispersion of the fluororesin, which is obtained by emulsion polymerization, is formulated in the form of an aqueous coating using a medium such as water, etc. and a dispersant, or phase transferred to an organic solvent to obtain an organosol, and then the powder coating, the aqueous coating or the organosol is coated.
When the fluororesin is compounded in the fluoroelastomer composition, the weight ratio of the fluoroelastomer to the fluororesin is usually from 95:5 to 20:80, preferably from 90:10 to 30:70.
When the amount of the fluoroelastomer exceeds 95 wt. %, the fusion bonding of the layer of the fluoroelastomer to the upper layer of the fusible fluororesin tends to decrease and thus the layers may be peeled. When the amount of the fluoroelastomer is less than 20 wt. %, the composition loses the elasticity of the fluoroelastomer and

also the coated film may suffer from some defects such as cracking.

The fusible fluororesin can be compounded in the fluoroelastomer composition by the following methods:

(1) When no medium is used

The fusible fluororesin is ground to form fine powder and kneaded with the fluoroelastomer compound.

(2) When the medium is an organic solvent

The fine powder of the fluororesin is dispersed in an organic solvent. Alternatively, the dispersion of the fluororesin is phase transferred to the organic solvent to obtain an organosol. Then, the dispersion or the organosol of the fluororesin is mixed with the fluoroelastomer composition comprising the organic solvent as the medium.

(3) When the medium is water

The fine powder of the fusible fluororesin is dispersed in water using a dispersant. Alternatively, the dispersion of the fluororesin as such is dispersed in water optionally using a dispersant. Then, the aqueous dispersion of the fluororesin is mixed with the fluororesin composition comprising water as the medium.

The composition obtained by the above method can be shaped or processed like the fluoroelastomer composition. That is, the composition is injection molded or extruded to form a film depending on the morphology and properties of the composition. In the case of a coating, it is applied on the article substrate by brush coating, spray coating, dip coating, flow coating, dispenser coating, screen coating, etc., thoroughly dried and then baked to form a coating film.

The article of the present invention is produced by forming the fluoroelastomer-containing layer on the article substrate and forming the surface (outermost) layer of the fusible fluororesin.

To improve the adhesion between the substrate and the fluoroelastomer composition containing the fusible fluororesin, it is preferable to apply a primer coating on the substrate. Furthermore, to increase the affinity between the primer coating composition and the fluoroelastomer composition containing the fusible fluororesin, a layer of a fluoroelastomer composition may be formed between them.

As the primer coating composition, a commercially available primer coating may be used depending on the kind of the substrate. Examples of the primer include silane coupling agents, titanium coupling agents, aluminum coupling agents, epoxy resins, phenol resins, epoxy-phenol resins, silcone resins, acrylic resins, etc.

Examples of the article substrate used in the present invention include metals (e.g. iron, stainless steel, copper, aluminum, brass, etc.), glass articles (e.g. plate glass, fabric or non-woven fabric of glass fiber, etc.), molded articles or coated articles of general or heat-resistant resins (e.g. polypropylene, polyoxymethylene, polyimide, polyamideimide, polysulfone, polyethersulfone, polyether ether ketone, etc.), molded aritlces and coated articles of general rubbers (e. g. SBR, butylrubber, NBR, EPDM, etc.) and heat-resistant rubbers (e.g. silicone rubbers, fluororubbers, etc.), fabric or non-woven fabric of natural or synthetic fiber, and the like.

The method for producing the article coated with the fluororesin according to the present invention will be explained by making reference to the application of the coating composition.

Preferably, the surface of the article substrate is well degreased and cleaned prior to the application of the fluoroelastomer composition.

To increase the adhesion between the article substrate and the fluoroelastomer composition, it is preferable to form a primer layer on the surface of the article substrate using, for example, a silane primer, a silicone primer, etc.

The fluoroelastomer composition is formulated in the form of a coating, and applied on the article substrate by spray coating, flow coating, dispenser coating, screen coating, etc. and thoroughly dried in an atmosphere of about 100°C to evaporate the medium.

Thereafter, the coated composition is baked at a temperature lower than the melting point of the fluororesin which may optionally be contained in the composition, for example, 150 to 250°C, for 0.5 to 24 hours.

In general, hydrogen fluoride and water are generated in the form of gas in the course of the curing reaction of the fluoroelastomer (except for the peroxide curing). The most of them are trapped with the acid-acceptor in the fluoroelastomer composition. However, in the case of the curing at a high temperature, the reaction gas may be discharged outside the curing system to cause the weight loss of the solid materials in the fluoroelastomer composition. Therefore, the amount of the gas generated in the curing reaction can be replaced with the weight difference of the fluoroelastomer composition before and after the curing reaction, and the degree of curing attained can be estimated from this weight difference. That is, as defined by the equation (1) described above, the degree of curing attained can be calculated from the weight difference of the coated film before and after curing.

After being cooled in the air, the coating of the fusible fluororesin is applied on the layer of the fluoroelastomer,

and baked at a temperature equal to or higher than the melting point of the fusible fluororesin, for example, 300 to 350°C for 5 to 60 minutes. Thereby, the fusible fluororesin contained in the fluoroelastomer composition bleeds up onto the surface of the coating layer of the fluoroelastomer, and is fused together with the fluororesin which is afterwards applied. At the same time, the fluoroelastomer and the fluororesin are bonded.

In the present invention, the fluororesin contained in the fluoroelastomer composition and that in the upper layer are preferably the same one.

The thickness of the layer of the fusible fluororesin is usually at least 1 μm.

As the thickness of the layer of the fusible fluororesin increases, the influence of the gas generated in the curing of the fluoroelastomer composition increases. Therefore, in the prior art technique, it is difficult to form the thick layer of the fluororesin on the layer of the fluoroelastomer. In contract with the prior art technique, it is possible to form the coating layer of the fusible fluororesin having a thickness of, for example, 5 μm or more according to the present invention.

The articles coated with the fusible fluororesin can be used in various fields which require heat resistance, solvent resistance, lubrication and/or non-stick properties. Specific examples of the applications include rolls (e.g. fixing rolls, press rolls, etc.) and conveying belts for OA equipment such as copying machines, printers, facsimiles, etc.; sheets and belts; O-rings, diaphragms, chemical-resistant tubes, fuel hoses, valve seals, gaskets for chemical plants, engine gaskets, and the like.

EXAMPLES

The present invention will be illustrated by the following examples.

Example

Preparation of "Fluoroelastomer Dispersion A"

A copolymer of vinylidene fluoride (VdF)-tetrafluoroethylene (TFE)-hexafluoropropylene (HFP) (monomeric composition (molar ratio) = 64:18:18) was prepared by emulsion polymerization, and the resulting polymer solution was concentrated with surfactants (a 20 wt. % aqueous solution of HS-208 available from NOF Corporation and a 20 wt. % aqueous solution of HS-215 available from NOF Corporation) to a solid concentration of 60 wt. % by making use of the clouding points of the nonionic surfactants. This dispersion will be referred to as "Fluoroelastomer Dispersion A".

Preparation of "Fluororesin Dispersion A"

A tetrafluoroethylene (TFE)-perfluorovinyl ether (PFVE) copolymer (PFA) (monomeric composition (molar ratio) = 96.5:3.5) was prepared by emulsion polymerization, and the resulting polymer solution was concentrated with a surfactant (a 20 wt. % aqueous solution of HS-208 and a 20 wt. % aqueous solution of HS-215) to a solid concentration of 60 wt. % by making use of the clouding points of the nonionic surfactants. This dispersion will be referred to as "Fluororesin Dispersion A".

Preparation of "Pigment Paste A"

A filler (TALOX R-516L) (3 wt. parts) and an acid-acceptor (DHT-4A available from KYOWA KAGAKU KOGYO Kabushikikaisha) (5 wt. parts) were dispersed in pure water (46 wt. parts) together with a surfactant (a 20 wt. % aqueous solution of HS-208) (2 wt. parts) to obtain a paste, which will be referred to as "Pigment Paste A".

Preparation of "Curing Agent Solution A"

A 60 % aqueous solution of γ-aminopropyltriethoxysilane (A-100 available from Nippon Unicar Co., Ltd.) was added to a 50 % aqueous solution of 3,9-bis(3-aminopropyl)-2,4,8,10-tetraoxa-2-spiro[5.5]-undecane (EPOMATE F-100 available from YUKA SHELL Co., Ltd.) in a weight ratio of 6:4 (the former to the latter). The resulting solution will be referred to as "Curing Agent Solution A".

Preparation of "Coating Composition A"

Fluoroelastomer Dispersion A (41 wt. parts), Fluororesin Dispersion A (41 wt. parts), Pigment Paste A (12 wt. parts), Thickening Agent A (a 5 wt. % aqueous solution of DS-60HN available from NOF Corporation) (4 wt. parts) and Thickening Agent B (a 50 wt. % aqueous solution of UH-140S available from ASAHI DENKA KOGYO K.K.) (2 wt.

parts) were mixed and well dispersed. To the aqueous dispersion obtained (100 wt. parts), Curing Agent Solution A (5 wt. parts) was added to obtain a coating composition, which will be referred to as "Coating Composition A".

Production of Coated Plate 1

On one half of the surface of an aluminum plate which had been cleaned with acetone, Coating Composition A was spray coated and dried at 80 to 100°C for 15 minutes, followed by baking at 200°C for 24 hours to form an under layer film having a thickness of about 35 μm.

After air cooling, a PFA powder coating (ACX-31 available from Daikin Industries Ltd.) was electrostatically coated on the under layer film so that the thickness of the film was about 30 μm after baking, and then baked at 350°C for 30 minutes to obtain Coated Plate a having a total coating thickness of about 65 μm.

With this coated plate, the following properties were evaluated.

Coating film properties:

The appearance of the coated film, non-tackiness and interlayer peel strength were evaluated as follows:

<Appearance of coated film>

The presence of blowing, spitting or blisters was visually observed.

<Non-tackiness>

One drop of pure water was dropped on the surface of the coating film and a contact angle was measured with a goniometer (available from KYOWA KAIMENKAGAKU KABUSHIKIKAISHA).

<Interlayer peel strength>

The layer of Coating Composition A and that of ACX-31 were peeled with a tensile test meter and the maximum adhesion force was measured, which was used as an interlayer peel strength.

Production of Coated Plate 2

On the surface of an aluminum plate (weight: $W_A$), which had been cleaned with acetone, Coating Composition A was spray coated and dried at 80 to 100°C for 15 minutes. Then, the weight ($W_0$) of the coated plate after drying was measured.

After that, the coated plate was baked at 200°C for 24 hours (first baking step) to obtain the coated film having a thickness of about 35 μm, and the weight ($W_1$) of the coated plate was measured. Then, the coated plate was further baked at 350°C for 30 minutes (second baking step) and the weight ($W_2$) of the coated plate was measured.

The weights $W_A$, $W_0$, $W_1$ and $W_2$ were as follows:

$W_A$: 40.3090 g
$W_0$: 41.1434 g
$W_1$: 41.0292 g
$W_2$: 41.0091 g

Calculation of the change of the coating film weight

With the coated plate 2, ($W_0$-$W_A$) ($W_2$-$W_1$) and ($W_1$-$W_0$) were calculated from the plate weights $W_A$, $W_0$, $W_1$ and $W_2$ at each step, and then the amount of the decomposed gas generated from Coating Composition A was calculated. The percentage of the decomposed gas generated in the first baking step corresponds to the degree of curing attained. The results are shown in Table 1.

Comparative Example

Coating Composition A was prepared in the same manner as in Example.

Production of Coated Plate 1'

On the surface of an aluminum plate which had been cleaned with acetone, Coating Composition A was spray coated and dried at 80 to 100°C for 15 minutes to form an under layer film having a thickness of about 35 μm.
After air cooling, a PFA powder coating (ACX-31 available from Daikin Industries Ltd.) was electrostatically coated on the under layer film so that the thickness of the film was about 30 μm after baking, and then baked at 350°C for 30 minutes to obtain Coated Plate a having a total coating thickness of about 65 μm.
With Coated Plate 1', the properties were evaluated in the same manner as in Example.

Production of Coated Plate 2'

On the surface of an aluminum plate (weight: $W_A$), which had been cleaned with acetone, Coating Composition A was spray dried and dried at 80 to 100°C for 15 minutes. Then, the weight ($W_0$) of the coated plate after drying was measured.
After that, the coated plate was baked at 200°C for 24 hours (first baking step) to obtain the coated film having a thickness of about 35 μm, and the weight ($W_1$) of the coated plate was measured.
The weights $W_A$, $W_0$ and $W_1$ were as follows:

$W_A$: 40.4539 g
$W_0$: 41.2650 g
$W_1$: 41.1539 g

Since no second baking step was carried out, $W_2$ was assumed to be the same as $W_1$.
The amount of the decomposed gas generated from Coating Composition A was calculated. The results are shown in Table 1.

Table 1

| Item | Example | Comparative Example |
|---|---|---|
| Appearance of coated film | No defect | Blowing and blisters |
| Contact angle (degree) | 106 | 105 |
| Interlayer peel strength (kgf/cm) | 1.0 | 0.2 |
| Amount of decomposed gas generated $(W_0-W_2) / (W_A-W_0)$ (mg/g) | 16.1 | 13.7 |
| Percentage of decomposed gas generated in 1st baking step (degree of curing attained) $(W_0-W_1)/(W_0-W_2)x100$ (%) | 85 | 100 |
| Percentage of decomposed gas generated in 2nd baking step $(W_1-W_2)/(W_0-W_2)x100$ (%) | 15 | 0 |

## Claims

1. An article coated with a fluororesin comprising an article substrate, an elastic layer formed on the surface of the substrate and a layer of a fusible fluororesin as the outermost layer, wherein the layer of the fusible fluororesin is formed by curing the elastic layer at a temperature equal to or lower than the melting point of the fusible fluororesin until a degree of curing attained, which is defined by the following equation (1), reaches 70 to 99.9%, and then melting the fusible fluororesin:

$$\text{Degree of curing attained} = [(W_0-W_A)-(W_1-W_A)]x100/(W_0-W_A)-(W_2-W_A)] \quad (1)$$

wherein $W_A$ is a weight of the substrate, $W_0$ is a total weight of the substrate and the dried coating layers, $W_1$ is a total weight of the substrate and the coating layers after the first baking step, and $W_2$ is a total weight of the substrate and the coating layers after the second baking step.

2. The article according to claim 1, wherein said layer of the fusible fluororesin has a thickness of at least 1 μm.

**3.** The article according to claim 1, wherein said layer of the fusible fluororesin has a thickness of at least 5 µm.

**4.** The article according to claim 1, wherein said elastic layer comprises at least a fluoroelastomer-containing layer.

**5.** The article according to claim 1, wherein said elastic layer is a layer comprising a fluoroelastomer and a fusible fluororesin.

**6.** The article according to claim 5, wherein a weight ratio of said fluoroelastomer to said fusible elastomer is from 95:5 to 20:80.

**7.** The article according to any one of claims 1, 2, 3, 5 and 6, wherein said fusible fluororesin is a fusible fluororesin having a melting point of 320°C or lower.

**8.** The article according to any one of claims 1 to 7, which is a roll or a belt for an office automation instrument.

**9.** A method for producing an article coated with a fluororesin comprising the steps of forming an elastic layer on a surface of an article substrate, and forming a layer of a fusible fluoroelastomer, wherein the layer of the fusible fluororesin is formed by curing the elastic layer at a temperature equal to or lower than the melting point of the fusible fluororesin until a degree of curing attained, which is defined by the following equation (1), reaches 70 to 99.9%, and then melting the fusible fluororesin:

$$\text{Degree of curing attained} = [(W_0-W_A) - (W_1-W_A)]x100/[(W_0-W_A) - (W_2-W_A)] \quad (1)$$

wherein $W_A$ is a weight of the substrate, $W_0$ is a total weight of the substrate and the dried coating layers, $W_1$ is a total weight of the substrate and the coating layers after the first baking step, and $W_2$ is a total weight of the substrate and the coating layers after the second baking step.

**10.** The method according to claim 9, wherein said elastic layer is cured at a temperature of 150 to 250°C for 0.5 to 24 hours.

**11.** The method according to claim 9, wherein said layer of the fluoroelastomer is molten at a temperature of 300 to 350°C for 5 to 60 minutes.

## INTERNATIONAL SEARCH REPORT

International application No.
PCT/JP00/01527

**A. CLASSIFICATION OF SUBJECT MATTER**

IPC 7 B32B27/30, B05D7/24, G03G15/20, F16G1/21

According to International Patent Classification (IPC) or to both national classification and IPC

**B. FIELDS SEARCHED**

Minimum documentation searched (classification system followed by classification symbols)

IPC 7 B32B27/30, B05D7/24, G03G15/20, F16G1/21

Documentation searched other than minimum documentation to the extent that such documents are included in the fields searched

| | | | |
|---|---|---|---|
| Jitsuyo Shinan Toroku Koho | 1996-2000 | Kokai Jitsuyo Shinan Koho | 1971-2000 |
| Jitsuyo Shinan Koho | 1926-1996 | Toroku Jitsuyo Shinan Koho | 1994-2000 |

Electronic data base consulted during the international search (name of data base and, where practicable, search terms used)

WPI/L

**C. DOCUMENTS CONSIDERED TO BE RELEVANT**

| Category* | Citation of document, with indication, where appropriate, of the relevant passages | Relevant to claim No. |
|---|---|---|
| X | JP, 8-328418, A (Canon Inc.), 13 December, 1996 (13.12.96) & US, 5763068, A | 1-11 |
| A | JP, 61-59382, A (SHOWA ELECTRIC WIRE & CABLE CO., LTD.), 26 March, 1986 (26.03.86) (Family: none) | 1-11 |

☐ Further documents are listed in the continuation of Box C. ☐ See patent family annex.

* Special categories of cited documents:
- "A" document defining the general state of the art which is not considered to be of particular relevance
- "E" earlier document but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 23 May, 2000 (23.05.00) | 06 June, 2000 (06.06.00) |
| Name and mailing address of the ISA/ Japanese Patent Office | Authorized officer |
| Facsimile No. | Telephone No. |

Form PCT/ISA/210 (second sheet) (July 1992)